# EUROPÄISCHE PATENTSCHRIFT

(11) **EP 1 851 934 B1**
(45) Veröffentlichungstag und Bekanntmachung des Hinweises auf die Patenterteilung: **30.11.2016**
(21) Anmeldenummer: 05784572.9
(22) Anmeldetag: 09.09.2005
(51) Int. Cl.: H04L 29/08, H04L 12/26, H04Q 3/00, H04L 1/24

(54) **VERFAHREN ZUR FEHLERERKENNUNG EINES NACHRICHTENINTERFACES IN EINER KOMMUNIKATIONSEINRICHTUNG**
METHOD FOR DETECTING A MESSAGE INTERFACE FAULT IN A COMMUNICATIONS DEVICE
PROCÉDÉ DE DÉTECTION D'ERREUR D'UNE INTERFACE D'INFORMATION DANS UN DISPOSITIF DE COMMUNICATION

(30) Priorität: 08.02.2005 DE 102005005710
(43) Veröffentlichungstag der Anmeldung: 07.11.2007
(73) Patentinhaber: Nokia Solutions and Networks GmbH & Co. KG, 81541 Munich (DE)
(72) Erfinder: WALLNER, Dieter, A-8052 Graz (AT); TINNACHER, Michael, A-8580 Köflach (AT); TEGELER, Jürgen, 82377 Penzberg (DE); LÖBIG, Norbert, 64291 Darmstadt (DE); HÖF, Jonas, 81739 München (DE)
(74) Vertreter: Weidel, Gottfried
(86) Internationale Anmeldenummer: PCT/EP2005/054482
(87) Internationale Veröffentlichungsnummer: WO 2006/084510

(56) Entgegenhaltungen:
- EP-A- 0 788 267
- EP-A- 1 213 876
- US-A- 5 668 800
- US-A1- 2004 017 780
- STEWART R ET AL: "Stream Control Transmission Protocol, RFC2960" IETF STANDARD, INTERNET ENGINEERING TASK FORCE, IETF, CH, 1. Oktober 2000 (2000-10-01), XP015008743 ISSN: 0000-0003

## Beschreibung

Die Erfindung betrifft ein Verfahren zur Fehlererkennung eines Nachrichteninterfaces in einer Kommunikationseinrichtung, wobei das Nachrichteninterface zumindest zwei Schichten (= Layer) aufweist und die Schichten miteinander kommunizieren und eine übergeordnete Schicht auf Services der darunter liegenden Schicht zugreift und höheren Schichten eigene Services anbietet.

Nachrichteninterfaces heute verfügbarer Kommunikationseinheiten, zum Beispiel eines Surpass Servers wie HIQ10, HIQ20, HIQ30 oder PCU (Packet Control Unit) der Firma Siemens, bestehen im Allgemeinen aus mehreren Instanzen und Layern (= Schichten), meist mit Kommunikationsstack bezeichnet. Fällt eine Instanz des Nachrichteninterfaces aus, kann der Nachrichtenverkehr immer noch über die anderen Instanzen geführt werden. Bis die Nachrichten über das Interface hinausgehen, durchlaufen sie im Allgemeinen eine Hierarchie von Layern. Ein Fehler in einem der Layer äußert sich im Allgemeinen für die Applikation, welche diesen Kommunikationsstack benützt, nur durch einen Gesamtausfall der Nachrichtenverbindung. Mit diesem wenig aussagekräftigen Fehlerbild sind gezielte, schnell durchführbare und begrenzte Korrekturmaßnahmen in der Regel nicht möglich. Man wird in der Regel einen höheren Reparaturaufwand beziehungsweise Recoverylevel und längere Ausfallzeiten haben, als dies bei einer gezielten Fehlererkennung der Fall wäre. Bisher bekannte Betriebssysteme bieten im Allgemeinen die Möglichkeit, einen Ausfall beziehungsweise einen Fehler im ersten Layer, dem sogenannten physischen Layer, zu erkennen. Dies bietet zwar den Vorteil eines relativ geringen Implementierungsaufwandes für die Fehlerbehandlung. Aber bei dieser beschränkten Testmöglichkeit wird die Überprüfung der Kommunikationsmöglichkeit zwischen den weiteren Instanzen des Nachrichteninterfaces nicht ermöglicht. Des Weiteren können bei dieser Implementierungsmethode keine gezielten Reparaturmaßnahmen unterhalb des Systemgesamtanlaufs eingeleitet werden. Die Patentanmeldung EP 0 788 267 befasst sich mit einem Verfahren, einer Vorrichtung und einem Computerprogrammprodukt zur Generierung von Testpaketen zur Verwendung in der Entwicklung von Netzwerkprotokollvorrichtungen. Das US Patent 5,668,800 beschreibt Pfadtests in Kommunikationsnetzwerken.

Es ist daher Aufgabe der Erfindung, ein Verfahren zur Fehlererkennung eines Nachrichteninterfaces in einer Kommunikationseinrichtung zur Verfügung zu stellen, welches es ermöglicht, zu erkennen, in welchem Layer der Ausfall stattfindet, um dann durch gezielte Maßnahmen mit möglichst geringen Auswirkungen genau diesen Fehler zu bereinigen.

Diese Aufgabe wird durch die Merkmale des Patentanspruches 1 gelöst. Vorteilhafte Weiterbildungen der Erfindung sind Gegenstand der untergeordneten Patentansprüche.

Die Erfinder haben erkannt, dass es möglich ist, die Zustandsinformation einzelner oder aller Layer mit einer überwachenden Funktion zu überprüfen und dadurch einen Fehler zu erkennen, zu lokalisieren und gegebenenfalls zu signalisieren. Hierdurch kann eine Reparatur durch partiellen oder totalen Neustart nur der beteiligten Layer effektiver, schneller und gezielter eingeleitet werden, als dies bei einem kompletten Neustart der Fall wäre. Falls eine automatische Reparatur nicht möglich ist, liefert die gezielte Alarmierung des Fehlers die Voraussetzung für eine schnelle, effiziente und manuelle Reparatur.

Demgemäß schlagen die Erfinder vor, das Verfahren zur Fehlererkennung eines Nachrichteninterfaces in einer Kommunikationseinrichtung, wobei das Nachrichteninterface zumindest zwei Schichten (= Layer) aufweist und die Schichten miteinander kommunizieren und eine übergeordnete Schicht auf Services einer darunter liegenden Layer2-Schicht zugreift und höheren Schichten eigene Services anbietet, dahingehend zu verbessern, dass zur Fehlererkennung in der übergeordneten Schicht zumindest eine Testapplikation zumindest eine direkt auf der Layer2-Schicht konstruierte Testnachricht versendet, die einem Protokoll der übergeordneten Schicht entspricht und Zustandsinformationen zumindest einer entsprechenden übergeordneten Schicht prüft, wodurch die Kommunikationsfähigkeit zwischen den Schichten des Nachrichteninterfaces kontrolliert wird.

Dadurch wird es möglich, die Verfügbarkeit eines Kommunikationssystems zu steigern. Der Grund dafür ist, dass im Fehlerfall nicht das vollständige System neu angefahren beziehungsweise gebootet werden muss, sondern eventuell nur die fehlerhafte Instanz des entsprechenden Layers im Kommunikationsstack.

Das neue Verfahren ermöglicht es durch einen Test die physikalische Verbindung zwischen verschiedenen Interfaceinstanzen zu überprüfen. Der Test bietet die Möglichkeit, wenn er in kurzen Intervallen durchgeführt wird, bei einem Verbindungsausfall quasi in Echtzeit spezifische Informationen darüber zu erhalten, welche Schicht des Kommunikationsprotokollstacks noch funktionsfähig ist und welche nicht. Diese können einerseits sofort alarmiert werden, andererseits aber auch als Indizien gesammelt werden und von einer Kontrollfunktion zu einem logischen Gesamtkommunikationsbild des Systems zusammengesetzt werden, um so eine komplexe, automatische Fehleranalyse des logischen Kommunikationsmodells zu ermöglichen beziehungsweise eine maximale Zuverlässigkeit in der Fehlererkennung zu gewährleisten.

Das Gesamtbild kann als solches alarmiert werden oder als Grundlage automatischer Reparaturmaßnahmen dienen. In beiden Fällen profitiert das System beziehungsweise sein Betreiber von detaillierter logischer Fehlerinformation, die ohne die Erfindung nicht zur Verfügung stände. In beiden Fällen kann mit dieser Information die Reparaturmaßnahme schneller und gezielter erfolgen, wodurch Zeitverlust beziehungsweise der Aufwand für zusätzliche Diagnosen in der Regel entfällt. Die Reparaturmaßnahme kann auf das notwendige Maß beschränkt werden, indem zum Beispiel nur der Neustart eines Layers stattfindet, der Probleme macht, statt Neustart der gesamten Systemplattform.

Alle diese Effekte führen zu einer Steigerung der Verfügbarkeit des Systems durch Verringerung beziehungsweise Vermeidung von Ausfallzeiten. Weiterhin kann eine Verringerung von Wartungskosten durch automatische Erfassung und gezielte Alarmierung von Störungen im logischen Schichtenmodell der Kommunikation erreicht werden, die sonst zu Kommunikationsverlust führen würde.

In der Kommunikationseinrichtung kann eine Schicht als physical Layer ausgebildet sein. Mit dem neuen Verfahren kann dann durch die zumindest eine versendete Testnachricht der zumindest einen Testapplikation die Variablen des physical Layers, vorzugsweise Informationen über einen vorhandenen Ethernet Treiber, überprüft werden. Hierdurch wird auf einfache Weise überprüft, ob überhaupt eine Verbindung über die Nachrichteninterfaces möglich ist.

Innerhalb der Kommunikationseinrichtung kann eine Schicht ein Data Link Layer sein. Im neuen Verfahren kann die Funktionsfähigkeit des Data Link Layers und des Nachrichteninterfaces dadurch überprüft werden, dass die Testapplikation die Kommunikationsfähigkeit durch Senden der Testnachricht vom Data Link Layer des Nachrichteninterfaces zu einer anderen Schicht des Nachrichteninterfaces überprüft.

Analog dazu, kann eine Schicht ein Network Layer sein. Zur Überprüfung des Network Layers kann eine Testnachricht beim Absenden durch einen Pfad der Kommunikationseinrichtung gesendet werden, aber nicht durch den Network Layer. Beim Empfangen der Testnachricht wird ein Pfad benutzt der den Network Layer mit einbezieht. Hierdurch wird überprüft, ob der Network Layer sowie alle unterhalb des Network Layers liegenden Schichten korrekt funktionieren. Es würde nicht ausreichen, nur eine Testnachricht zwischen 2 Netzwerkadressen

(z.B. IP-Adressen) des selben Servers zu schicken, da in diesem Fall das Testpaket nur durch das Loopbackinterface laufen würde und man keine Aussage darüber machen könnte, ob tatsächlich eine Verbindungsmöglichkeit nach außen gegeben ist.

Es ist günstig, wenn die Testnachricht durch einen separaten Anwendungsprozess gesendet bzw. aufgefangen wird, welcher nur auf diese Testnachricht abgestimmt ist. Hierdurch wird vermieden, dass andere Applikationen, die gerade auf der Kommunikationseinrichtung aktiv sind, durch die Testnachricht beeinflusst oder behindert werden.

In einer Variante des neuen Verfahrens kann zur Ermittlung der Funktionsfähigkeit des Network Layers ein Loopbackinterface verwendet werden. Wenn der IP Loopback Test und der Layer2 Test erfolgreich waren, kann man daraus ebenfalls schließen, dass eine Kommunikation nach außen möglich ist.

In ähnlicher Weise dazu, kann eine Testnachricht über das Loopbackinterface gesendet werden, um dadurch einen Transport- und Applikations Layer auf dessen Funktionsfähigkeit hin zu überprüfen.

Ein wesentliche und vorteilhafte Variante des erfindungsgemäßen Verfahrens beinhaltet, dass die Testapplikation im Falle zumindest eines gefundenen Fehlers in einer oder mehreren Schichten, eine Reparatur durch einen partiellen oder gesamten Neustart aller beteiligten Schichten einleitet. Hierdurch muss nicht das vollständige System neu angefahren beziehungsweise gebootet werden, sondern eventuell nur die fehlerhafte Instanz. Die Verfügbarkeit des Systems wird hierdurch besonders gut optimiert.

Ergänzend dazu, kann die Testapplikation den Fehler und/oder den Fehlerort innerhalb der Kommunikationseinrichtung anzeigen. Bleibt ein Reboot der Schicht, die als fehlerhaft angezeigt wurde, erfolglos, so kann eine notwendige manuelle Reparatur der fehlerhaften Schicht schnell und gezielt erfolgen.

Durch dieses Verfahren ist es möglich, die Funktionsfähigkeit aller Transportprotokollschichten, unter anderem auch die des SCTP (Stream Control Transmission Protocol) Protokolls zu testen. Hierdurch wird die breite Anwendbarkeit des neuen Verfahrens auf vielen Kommunikationseinrichtungen begünstigt, da in der Regel für den Transport von Signalisierungsdaten das Stream Control Transmission Protocol von diesen Kommunikationseinrichtungen verwendet wird.

Im folgenden wird die Erfindung anhand der bevorzugten Ausführungsbeispiele mit Hilfe der Figuren näher beschrieben, wobei darauf hingewiesen wird, dass nur die für das unmittelbare Verständnis der Erfindung wesentlichen Elemente gezeigt sind. Hierbei werden die folgenden Bezugszeichen verwendet: 1: Switch 1; 2: Switch 2; 3: Crosslink; 3.1: Ausfall im Crosslink; 4: PCU / Server; 4.1: Verbindung PCU und Switch 1; 4.2: Verbindung PCU und Switch 2; 5.1: SCTP Protokollinstanz in PCU 1; 5.2: SCTP Protokollinstanz in PCU 1; 5.3: Logische Verbindung zwischen SCTP Protokollinstanzen, physikalische Verbindung läuft über Crosslink; 5.4: Ausfall SCTP Protokollinstanz in PCU 1; 6.1: IP Protokollinstanz in PCU 1; 6.2: IP Protokollinstanz in PCU 2; 6.3: Logische Verbindung zwischen IP Protokollinstanzen, physikalische Verbindung läuft über Crosslink; 6.4: IP Modul im Knoten 10; 6.5: IP Modul im Knoten 11; 7.1: Data Link Protokollinstanz für Ethernet-Interface 1; 7.2: Data Link Protokollinstanz für Ethernet Interface 2; 7.3: Logische Verbindung zwischen Data Link Protokollinstanzen, physikalische Verbindung läuft über Crosslink; 8.1: Ethernet Treiber für Interface 1; 8.2: Ethernet Treiber für Interface 2; 8.3: Ethernet Treiber im Knoten 10; 8.4: Ethernet Treiber im Knoten 11; 9: Physical Layer / Layer2 Switch; 9.1: Verbindung Physical Layer Interface 1; 9.2: Verbindung Physical Layer Interface 2; 9.3: Physical Layer im Knoten 10; 9.4: Physical Layer im Knoten 11; 10: erster Knoten; 11: zweiter Knoten; 12.1: UDP Protokollinstanz im Knoten 10; 12.2: UDP Protokollinstanz im Knoten 11; 13.1: Failover Kontrollprozess im Knoten 10; 13.2: Failover Kontrollprozess im Knoten 11.

Es zeigen im Einzelnen:
- Figur 1:: Prinzipskizze, in der ein Ausfall eines Crosslinks zwischen zwei Layer2 Switches dargestellt ist;
- Figur 2:: Prinzipskizze, die einen Teil einer Kommunikationseinrichtung mit zwei Interfaces darstellt, wobei ein Fehler in einer Protokollinstanz auftritt;
- Figur 3:: Prinzipskizze einer Verbindung zweier Knoten einer Kommunikationseinheit sowie zugehörigen Kommunikationsstack mit den relevanten Komponenten innerhalb der Knoten.

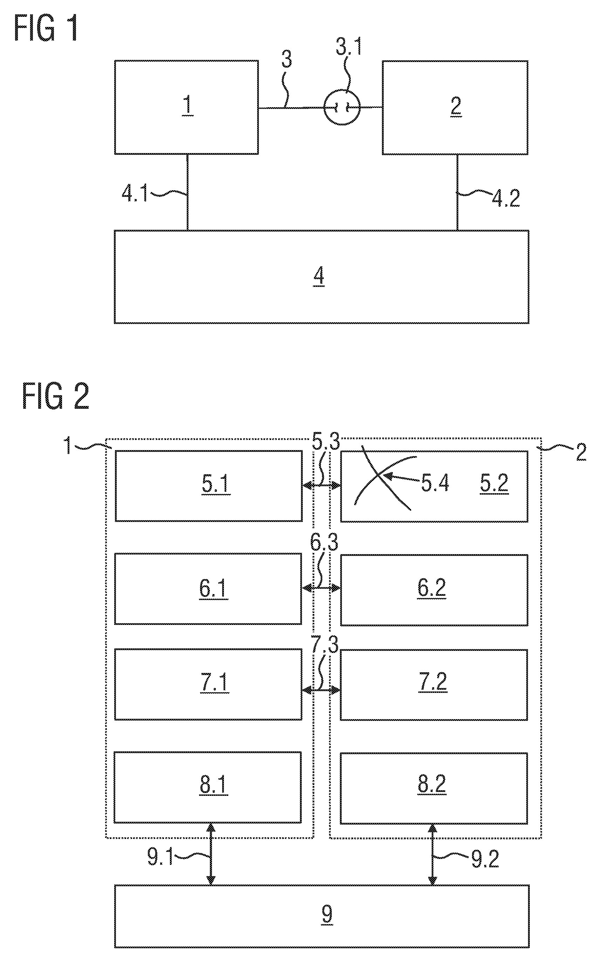

Die **Figur 1** zeigt eine Prinzipskizze, in der ein Ausfall 3.1 eines Crosslinks 3 zwischen zwei Interfaces der Switche 1 und 2, dargestellt ist. In redundanten Netzwerkkonfigurationen dürfen im Allgemeinen keine nicht gedoppelten kritischen Ausfallseinheiten auftreten. Aus diesem Grund hängen Surpass Server, wie zum Beispiel die HiQ10, HiQ20, HiQ30 oder der PCU 4, mit je einem Ethernet Port an je einem Layer2 Switch. Diese beiden Switche 1 und 2 sind durch mindestens einen Crosslink 3 verbunden. Gewisse Netzwerkkonfigurationen können entweder den Ausfall des Crosslinks 3.1 oder den Ausfall eines Ethernet Ports ohne Verlust verkraften. Erst der nächste Crosslinkausfall 3.1 zerstört dann aber die Kommunikationsfähigkeit.

Durch das neue Verfahren werden nun sowohl ein einzelner Portausfall einer redundanten Interfacekarte auf einem der Server sowie ein Ausfall des Crosslinks zwischen den Switches erkannt und alarmiert. Durch Erkennen des Ausfalls 3.1 des Crosslinks 3 kann rechtzeitig eine Reparatur eingeleitet werden. Der Ausfall 3.1 eines Crosslinks 3 ist dadurch gekennzeichnet, dass die Verbindungen beziehungsweise die Links 4.1 und 4.2 vom Server 4 zu den Switchen 1 und 2 aktiv sind, was durch die Abfrage des Link Status der Treiber des Servers 4 kontrolliert werden kann. Die Kommunikation von einer Interfaceinstanz 1 oder 2 auf die jeweils andere Interfaceinstanz 2 oder 1 funktioniert aber nicht. Beispielsweise kann auf der PCU 4 eine Anwendung laufen, welche (Daten-)pakete zwischen den beiden Interfaces 1 und 2 hin und her schicken muss. Diese (Daten-)pakete müssen notgedrungen über den Crosslink 3, welcher die beiden Switche 1 und 2 miteinander verbindet, laufen. Fällt nun diese Kommunikation zwischen den beiden Switchen 1 und 2 aus, so kann im neuen Verfahren eine überwachende Applikation daraus schließen, dass der Crosslink 3 einen Ausfall 3.1 aufweist, falls die Ethernettreiber anzeigen, dass die elektrische Kommunikation beziehungsweise die Verbindung 4.1 und 4.2 zwischen dem Switch 1 und 2 und der PCU 4 in Ordnung ist.

Die **Figur 2** zeigt eine Prinzipskizze, in der ein Fehler 5.4 in einer SCTP Protokollinstanz 5.2 auftritt. Für den Transport von Signalisierungsdaten wird in der Telekommunikation oft ein spezielles Transportprotokoll, nämlich meistens SCTP (= Stream Control Transmission Protocol), verwendet. Dies kann als Kerneltreiber oder als User Level Protocol realisiert sein, im Allgemeinen ist es aber nicht Teil des Betriebssystems. Wenn beispielsweise nur eine SCTP Protokollinstanz reinitialisiert werden muss, in Figur 2 ist dies die SCTP Protokollinstanz 5.2, kann eine komplette Plattform Recovery beziehungsweise ein Reboot vermieden werden. Dadurch kann eine höhere Verfügbarkeit des Gesamtsystems erreicht werden.

In Figur 2 wird beispielhaft angenommen, dass eine IP basierte Kommunikationseinrichtung mit zwei Interfaceinstanzen 1 und 2 (gestrichelt eingerahmt) vorliegt, welche an einen Layer2 Switch, mit physical Layer 9 bezeichnet, angeschlossen sind. Die Treibersoftware der Treiber 8.1 und 8.2 kann überprüfen, ob eine elektrische Verbindung 9.1 und 9.2 zwischen den Interfaceinstanzen 1 und 2 und dem physical Layer / Layer2 Switch 9 existiert. Auf der nächst höheren Ebene kann eine Applikation - im Fall des High Availability PCU Clusters ist dies der Überwachungsprozess FO-CTRL - überprüfen, ob eine Kommunikation beziehungsweise eine Verbindung 7.3 zwischen den beiden Ethernet Interfaces über den Switch / Physical Layer 9 möglich ist, ohne dabei die IP Protokollinstanzen 6.1 und 6.2 mit einzubeziehen. Weiterhin kann eine andere Applikation überprüfen, ob für ein IP Packet eine Kommunikationsmöglichkeit 6.3 zwischen den Protokollinstanzen 6.1 und 6.2 besteht. In diesem Fall muss das IP Packet direkt auf Layer2 konstruiert und abgeschickt werden. Ansonsten würde ein IP Packet, welches von der Einrichtung aus an eine der lokalen IP Adressen derselben Kommunikationseinrichtung geschickt wird, nur über das Loopbackinterface laufen und nie die Kommunikationseinrichtung verlassen. Eine weitere Testapplikation kann mit derselben Methode ein SCTP Packet über einen Link 9.1 oder 9.2 schicken und überprüfen, ob es am SCTP Modul 5.1 oder 5.2 aufgefangen wird. Diese Tests können noch unterstützt werden durch Loopbacktests am IP beziehungsweise Transportlayer, also zwischen den IP Protokollinstanzen 6.1 und 6.2 beziehungsweise den SCTP Protokollinstanzen 5.1 und 5.2. Ist es nun zum Beispiel nicht möglich, das SCTP Packet wieder aufzufangen, das IP Packet jedoch schon, so wird über das neue Verfahren erkannt, das ein Fehler in einer SCTP Protokollinstanz 5.1 oder 5.2, hier im SCTP Modul 5.2, aufgetreten ist. Mit Hilfe des neuen Verfahrens kann dieses SCTP Modul 5.2 gezielt neu initialisiert werden, ohne das gesamte System neu zu booten.

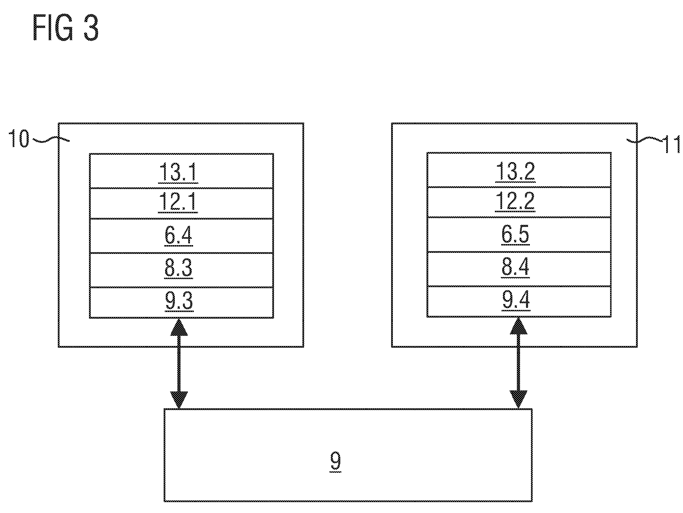

Die **Figur 3** zeigt eine weitere Prinzipskizze, die die Verbindung zweier Knoten 10 und 11 einer Kommunikationseinheit über einen sogenannten Kommunikationsstack darstellt. Weiterhin sind in den Knoten 10 und 11 die relevanten Komponenten darstellt. Tritt in der Kommunikationseinheit eine Isolation einer PCU auf, zum Beispiel in Form einer Isolation eines Failover Kontrollprozesses (FO-CTRL) 13.1 und 13.2 von seinem Partner am zugeordneten Knoten 10 oder 11 kann dies aufgrund der geschichteten Architektur des Kommunikationsstacks verschiedene Ursachen haben. Solange zumindest ein Kommunikationspfad zwischen den Knoten 10 und 11 funktioniert, tritt keine Isolation auf. Wenn nun der Failover Kontrollprozess FO-CTRL 13.1 auf Knoten 10 ein Kommunikationsproblem zu seinem Partnerprozess am Knoten 11 entdeckt, zum Beispiel eine fehlende Kontrollnachrichten, so muss er den genauen Grund dafür wissen, um geeignete Maßnahmen zu ergreifen. Dies erfordert eine detaillierte Analyse des Kommunikationsstacks. Wenn eine untere Komponente des Kommunikationsstacks am eigenen Knoten 10 aufhört zu arbeiten, zum Beispiel der physikalische Layer 9.3, dann darf der Failover Kontrollprozess FO-CTRL 13.1 auf diesem Knoten 10 nicht länger auf Ressourcen zugreifen, welche er mit dem Knoten 11 teilt. Dies ist nötig, um eine Situation zu vermeiden, in dem beide Knoten der Meinung sind, sie müssten nun aktiv werden und Resourcen belegen (Split Brain Syndrom). Wenn hingegen für den Failover Kontrollprozess FO-CTRL 13.2 auf Knoten 11 alle unteren Komponenten des Kommunikationsstacks aktiv sind und er nur mit seinem Partnerprozess auf Knoten 10 nicht mehr kommunizieren kann, so muss er dann die Ressourcen übernehmen, welche er mit dem Knoten 10 teilt. Dieses einfache Beispiel zeigt bereits, dass die Bestimmung der Herkunft des Kommunikationsausfalls ein wichtiger Punkt für eine Split Brain Vermeidung ist. Dieses Verfahren kann beispielsweise in der Surpass HighAvailability-PCU realisiert werden.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

## Patentansprüche

1. Verfahren zur Fehlererkennung eines Nachrichteninterfaces (1, 2) in einer Kommunikationseinrichtung, wobei das Nachrichteninterface (1, 2) zumindest zwei Schichten (= Layer) (5.1, 5.2, 6.1, 6.2, 7.1, 7.2, 8.1, 8.3 und 9) aufweist und die Schichten miteinander kommunizieren und eine übergeordnete Schicht auf Services einer darunter liegenden Layer2-Schicht zugreift und höheren Schichten eigene Services anbietet, **dadurch gekennzeichnet, dass** zur Fehlererkennung (3.1, 5.4) in der übergeordneten Schicht zumindest eine Testapplikation zumindest eine direkt auf der Layer2-Schicht konstruierte Testnachricht versendet, die einem Protokoll der übergeordneten Schicht entspricht und Zustandsinformationen zumindest einer entsprechenden übergeordneten Schicht prüft, wodurch die Kommunikationsfähigkeit zwischen den Schichten des Nachrichteninterfaces (1, 2) kontrolliert wird.

2. Verfahren nach dem voranstehenden Anspruch 1 , **dadurch gekennzeichnet, dass** eine Schicht ein physical Layer (9) ist, wobei die zumindest eine Testnachricht der zumindest einen Testapplikation die Variablen des physical Layers (9), vorzugsweise Informationen über einen Ethernet Treiber (8.1 und 8.2), überprüft.

3. Verfahren nach einem der voranstehenden Ansprüche 1 und 2, **dadurch gekennzeichnet, dass** eine Schicht ein Data Link Layer ist, wobei die Testapplikation die Kommunikationsfähigkeit durch Senden der Testnachricht vom Data Link Layer des Nachrichteninterfaces (1, 2) zu einer anderen Schicht des Nachrichteninterfaces (1, 2) überprüft.

4. Verfahren nach einem der voranstehenden Ansprüche 1 bis 3, **dadurch gekennzeichnet, dass** eine Schicht ein Network Layer ist, wobei die Testnachricht beim Absenden durch einen Pfad der Kommunikationseinrichtung gesendet wird, der den Network Layer nicht enthält, aber über den Network Layer empfangen wird.

5. Verfahren nach dem voranstehenden Anspruch 4, **dadurch gekennzeichnet, dass** die Testnachricht durch einen separaten Anwendungsprozess aufgefangen wird, welcher nur auf diese Testnachrichten abgestimmt ist.

6. Verfahren nach einem der voranstehenden Ansprüche 4 und 5, **dadurch gekennzeichnet, dass** zur Ermittlung der Funktionsfähigkeit des Network Layers ein Loopbackinterface verwendet wird.

7. Verfahren nach einem der voranstehenden Ansprüche 1 bis 6, **dadurch gekennzeichnet, dass** eine Schicht ein Transport- oder Applikations Layer ist, wobei zur Ermittlung der Funktionsfähigkeit des Transport- oder Applikations Layers die Testnachricht über das Loopbackinterface gesendet wird.

8. Verfahren nach einem der voranstehenden Ansprüche 1 bis 7, **dadurch gekennzeichnet, dass** die Testapplikation im Falle zumindest eines gefundenen Fehlers (3.1, 5.4) in einer oder mehreren Schichten, eine Reparatur durch einen partiellen oder gesamten Neustart aller beteiligten Schichten einleitet.

9. Verfahren nach einem der voranstehenden Ansprüche 1 bis 8, **dadurch gekennzeichnet, dass** die Testapplikation den Fehler (3.1, 5.4) und/oder den Fehlerort innerhalb der Kommunikationseinrichtung anzeigt.

10. Verfahren nach einem der voranstehenden Ansprüche 1 bis 9, **dadurch gekennzeichnet, dass** die Testapplikation die Funktionsfähigkeit des Layers mit einem SCTP (= Stream Control Transmission Protocol) überprüft.

## Claims

1. Method for error recognition for a communication interface (1, 2) in a communication device, wherein the communication interface (1, 2) has at least two layers (5.1, 5.2, 6.1, 6.2, 7.1, 7.2, 8.1, 8.3 and 9) and the layers communicate with one another, and a superordinate layer accesses services of an underlying Layer2 layer and provides higher layers with services of its own, **characterized in that** error recognition (3.1, 5.4) in the superordinate layer is effected by virtue of at least one test application sending at least one test message constructed directly on the Layer2 layer, which test message corresponds to a protocol from the superordinate layer and checks state information at least from a corresponding superordinate layer, thus controlling the communication capability between the layers of the communication interface (1, 2).

2. Method according to preceding Claim 1, **characterized in that** a layer is a physical layer (9), wherein the at least one test message from the at least one test application checks the variables of the physical layer (9), preferably information about an Ethernet driver (8.1 and 8.2).

3. Method according to either of preceding Claims 1 and 2, **characterized in that** a layer is a data link layer, wherein the test application checks the communication capability by sending the test message from the data link layer of the communication interface (1, 2) to another layer of the communication interface (1, 2).

4. Method according to one of preceding Claims 1 to 3, **characterized in that** a layer is a network layer, wherein the test message, when sent, is sent by a path of the communication device that does not contain the network layer, but is received via the network layer.

5. Method according to preceding Claim 4, **characterized in that** the test message is picked up by a separate application process that is tuned only to these test messages.

6. Method according to either of preceding Claims 4 and 5, **characterized in that** the operability of the network layer is ascertained by using a loopback interface.

7. Method according to one of preceding Claims 1 to 6, **characterized in that** a layer is a transport or application layer, wherein the operability of the transport or application layer is ascertained by sending the test message via the loopback interface.

8. Method according to one of preceding Claims 1 to 7, **characterized in that** in the event of at least one error (3.1, 5.4) being found in one or more layers, the test application initiates a repair by virtue of a partial or total restart of all involved layers.

9. Method according to one of preceding Claims 1 to 8, **characterized in that** the test application displays the error (3.1, 5.4) and/or the error location within the communication device.

10. Method according to one of preceding Claims 1 to 9, **characterized in that** the test application checks the operability of the layer using an SCTP (Stream Control Transmission Protocol).

## Revendications

1. Procédé de détection d'erreur d'une interface de messages (1, 2) dans un dispositif de communication, l'interface de messages (1, 2) comportant au moins deux couches (= Layer) (5.1, 5.2, 6.1, 6.2, 7.1, 7.2, 8.1, 8.3 et 9) et les couches communiquant entre elles et une couche située au-dessus accédant à des services d'une couche Layer2 inférieure et offrant de propres services à des couches situées au-dessus, **caractérisé en ce qu'**au moins une application de test envoie, aux fins de la détection d'erreur (3.1, 5.4) dans la couche supérieure, au moins un message de test construit directement sur la couche Layer2, lequel est conforme à un protocole de la couche supérieure et vérifie des informations d'état d'au moins une couche supérieure correspondante, ce qui permet de contrôler la capacité de communiquer entre les couches de l'interface de messages (1, 2).

2. Procédé selon la revendication précédente 1, **caractérisé en ce qu'**une couche est un Layer physique (9), l'au moins un message de test de l'au moins une application de test vérifiant les variables du Layer physique (9), de préférence des informations sur un pilote Ethernet (8.1 et 8.2).

3. Procédé selon l'une des revendications précédentes 1 et 2, **caractérisé en ce qu'**une couche est un Data Link Layer, l'application de test vérifiant la capacité de communiquer par envoi du message de test du Data Link Layer de l'interface de messages (1, 2) vers une autre couche de l'interface de messages (1, 2).

4. Procédé selon l'une des revendications précédentes 1 à 3, **caractérisé en ce qu'**une couche est un Network Layer, le message de test étant, lors de l'émission, envoyé sur un chemin du dispositif de communication qui ne contient pas le Network Layer, mais est reçu via le Network Layer.

5. Procédé selon la revendication précédente 4, **caractérisé en ce que** le message de test est intercepté par un processus d'application séparé qui est adapté uniquement à ces messages de test.

6. Procédé selon l'une des revendications précédentes 4 et 5, **caractérisé en ce qu'**une interface de bouclage est utilisée pour déterminer la capacité de fonctionnement du Network Layer.

7. Procédé selon l'une des revendications précédentes 1 à 6, **caractérisé en ce qu'**une couche est une couche de transport ou d'application, le message de test étant envoyé via l'interface de bouclage pour déterminer la capacité de fonctionnement de la couche de transport ou d'application.

8. Procédé selon l'une des revendications précédentes 1 à 7, **caractérisé en ce que** l'application de test, lorsqu'au moins une erreur (3.1, 5.4) est trouvée dans une ou plusieurs couches, lance une réparation par un redémarrage partiel ou total de toutes les couches impliquées.

9. Procédé selon l'une des revendications précédentes 1 à 8, **caractérisé en ce que** l'application de test indique l'erreur (3.1, 5.4) et/ou la localisation de l'erreur au sein du dispositif de communication.

10. Procédé selon l'une des revendications précédentes 1 à 9, **caractérisé en ce que** l'application de test vérifie la capacité de fonctionnement de la couche au moyen d'un SCTP (= Stream Control Transmission Protocol).
